(19) Europäisches Patentamt / European Patent Office / Office européen des brevets

(11) **EP 2 280 554 A2**

(12) **EUROPEAN PATENT APPLICATION**

(43) Date of publication:
**02.02.2011 Bulletin 2011/05**

(51) Int Cl.:
*H04N 13/00* *(2006.01)*

(21) Application number: **10251299.3**

(22) Date of filing: **21.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **21.07.2009 JP 2009170251**

(71) Applicant: **FUJIFILM Corporation
Tokyo 106-8620 (JP)**

(72) Inventor: **Koichi Tanaka
Kurokawa-gun Miyagi 981-3496 (JP)**

(74) Representative: **Stevens, Jason Paul
Dehns
St Bride's House
10 Salisbury Square
London
EC4Y 8JD (GB)**

(54) **Image reproducing apparatus and image reproducing method**

(57)     In an image reproducing apparatus (10, 20), the parallax adjustment amount is modified on the basis of the digital zoom information. The shift amount and the display range of each of the right and left images in the horizontal direction are computed on the basis of the modified parallax adjustment amount, and the right and left images are trimmed in the horizontal direction to be displayed. Accordingly, irrespective of a digital zoom magnification, it is possible to stereoscopically display an image while always maintaining an appropriate parallax.

FIG.10

## Description

The present invention relates to an image reproducing apparatus and an image reproducing method, and more particularly, to an image reproducing apparatus and an image reproducing method that are capable of performing a digital zoom of a stereoscopic image while maintaining an appropriate stereoscopic effect.

There has been known a display apparatus which causes right and left eyes of an observer to simultaneously view two images having a parallax therebetween, to thereby cause the observer to stereoscopically view an image. In such a display apparatus, in a case where right and left images are enlarged by a digital zoom, a parallax amount on a display plane of the right and left images is accordingly enlarged.

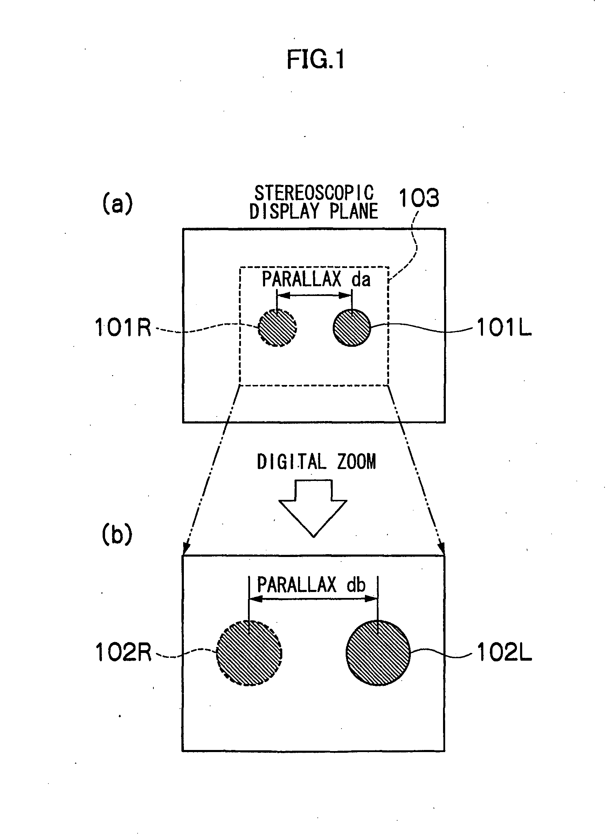

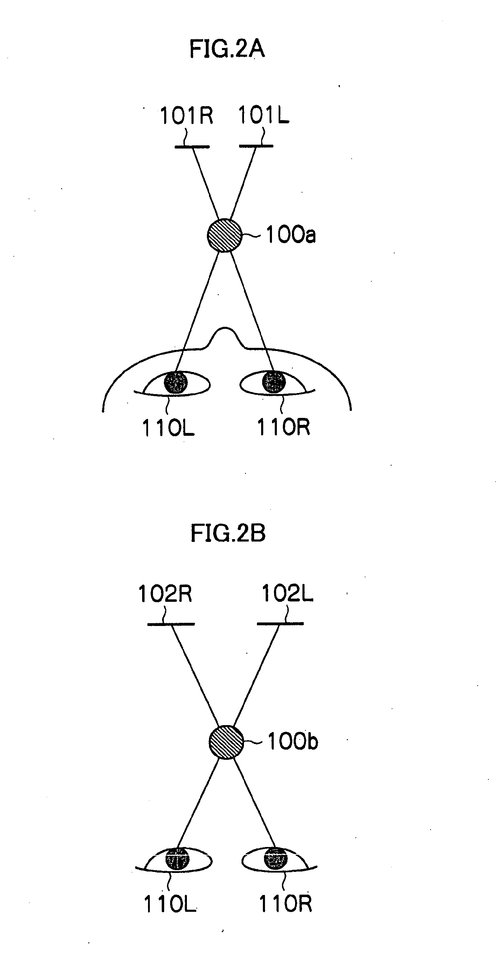

For example, it is assumed as illustrated in portion (a) of Fig. 1 that a right image 101 R and a left image 101 L having a parallax da therebetween are stereoscopically displayed on a stereoscopic display plane. In this state, as illustrated in Fig. 2A, a right eye 110R of an observer views the right image 101R. and a left eye 110L of the observer views the left image 101 L, whereby a stereoscopic image 100a is stereoscopically recognized.

Here, as illustrated in portion (b) in Fig. 1, when a digital zoom is performed so that the part corresponding to a region 103 in portion (a) of Fig. 1 is enlarged, the right image 101 R and the left image 101 L are enlargedly displayed as images 102R and 102L, respectively, and the parallax da is also enlarged to a parallax db. As a result, as illustrated in Fig. 2B, a stereoscopic image 100b is stereoscopically recognized.

However, if a parallax amount of the parallax db is not appropriate, a stereoscopic effect of the stereoscopic image 100b becomes unnatural. In addition, if the parallax amount thereof is excessively large, the stereoscopic image 100b cannot be stereoscopically viewed in some cases.

As a measure against such a problem, Japanese Patent No. 3653790 discloses an apparatus which changes cut-out positions of right and left images in accordance with a parallax amount and a zoom magnification before a zoom operation to adjust the parallax amount so that a parallax amount on a display plane of a stereoscopic image after the digital zoom does not exceed a fusional limit of an observer for the stereoscopic image.

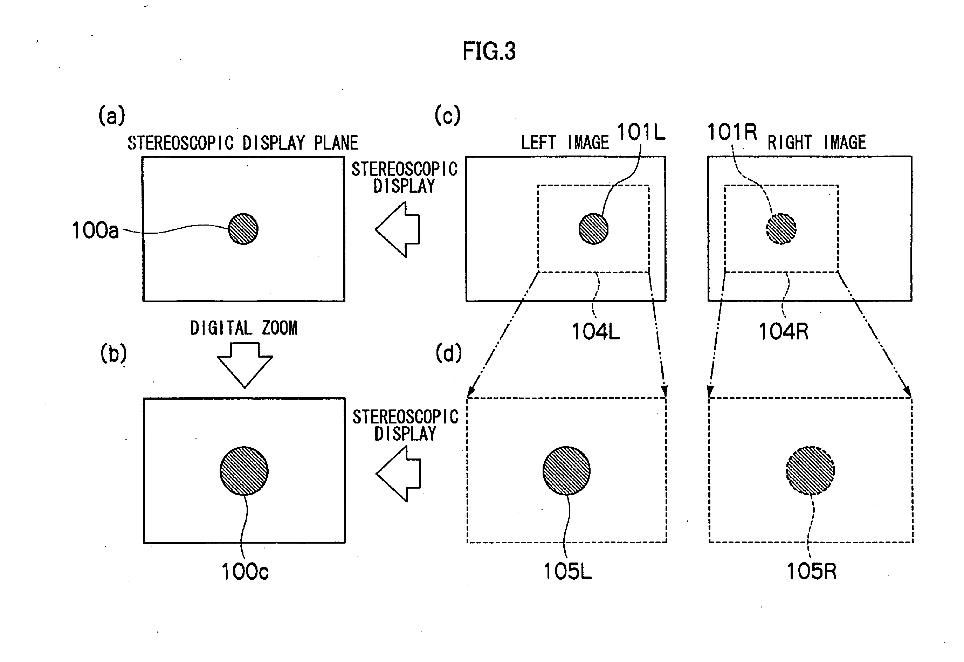

For example, in an example illustrated in portions (a) to (d) of Fig. 3, respective cut-out regions 104R and 104L of the right image and the left image are decided so that the parallax between the right image 101R and the left image 101 L is zero. Further, a right image 105R and a left image 105L, which are obtained by digitally zooming the cut-out regions 104R and 104L, are stereoscopically displayed, to thereby obtain a stereoscopic image 100c. In this manner, when a subject having the parallax on the original image is digitally zoomed, in order to prevent the stereoscopic image from excessively protruding with respect to a plane of a display screen, the cut-out position is adjusted so that a horizontal parallax of the subject is zero. In the example described above, a description is given of the case of a single subject as illustrated in Figs. 3A and 3B. In a case where there are a plurality of subjects, the cut-out position is adjusted so that a horizontal parallax of the subject selected by a user is zero.

However, with the apparatus disclosed in Japanese Patent No. 3653790, a desired parallax amount may not be realized in some cases depending on the zoom magnification or the parallax amount of the subject.

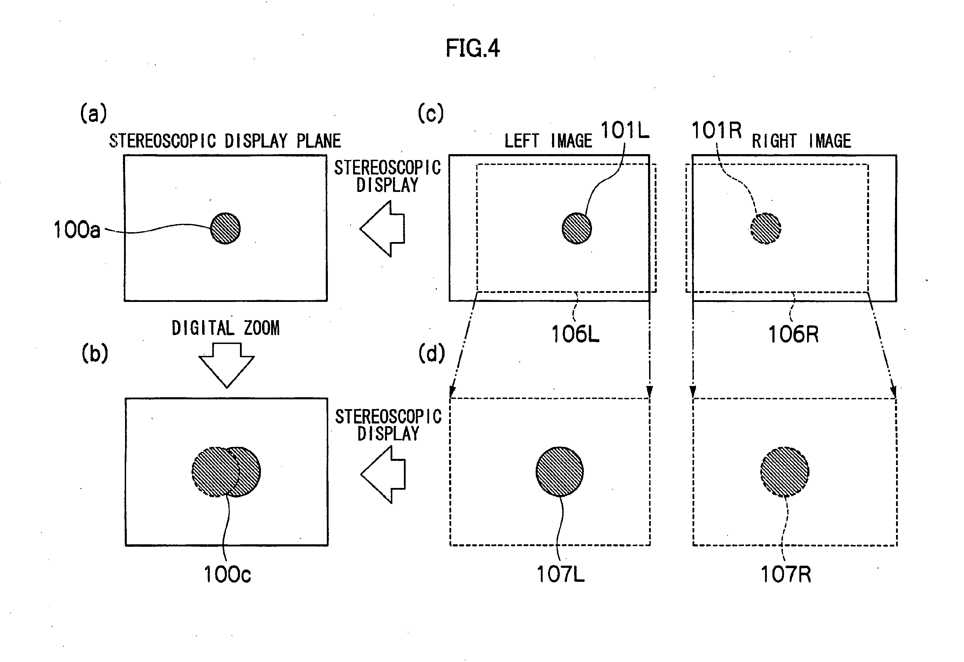

For example, in an example illustrated in portions (a) to (d) of Fig. 4, when the parallax between the right image 101 R and the left image 101 L is made zero, parts of the cut-out regions 106R and 106L are out of the image range. In this case, special processing, for example, processing of avoiding the reference to the outside of the image needs to be performed, but Japanese Patent No. 3653790 does not consider such measures. Therefore, a stereoscopic image 100d which is obtained by stereoscopically displaying the thus obtained right image 107R and left image 107L cannot have an appropriate stereoscopic effect and cannot be stereoscopically viewed in some cases.

The present invention has been made in view of the circumstances described above, and therefore has, at least in its preferred embodiments, an object to provide an image reproducing apparatus and an image reproducing method that are capable of performing a digital zoom of a stereoscopic image while maintaining an appropriate stereoscopic effect.

In order to achieve the above-mentioned object, according to a first aspect of the invention there is provided an image reproducing apparatus which includes: an image input device which receives right and left images having a parallax therebetween; a display device which stereoscopically displays the right and left images; a parallax adjustment amount input device which receives a parallax adjustment amount for adjusting the parallax between the right and left images; a shift amount computing device which computes a shift amount of each of the right and left images in a horizontal direction on the basis of the parallax adjustment amount; a display range computing device which computes a display range of each of the right and left images in the horizontal direction on the basis of the shift amount; an image cutout device which trims the right and left images in the horizontal direction on the basis of a result of the computation by the display range computing device, and displays the trimmed images; a digital zoom information input device which receives digital zoom information of the right and left images which are stereoscopically displayed on the display device; a digital zoom device which cuts out a predetermined image region from each of the right and left images on the basis of the digital zoom information, and enlarges the cut-out predetermined image regions; and a parallax adjustment amount modification device which modifies the parallax adjustment amount on the basis of the digital zoom information.

In the image reproducing apparatus according to the first aspect, the parallax adjustment amount is modified on the basis of the digital zoom information, the shift amount and the display range of each of the right and left images in the horizontal direction are computed on the basis of the modified parallax adjustment amount, and the right and left images are trimmed in the horizontal direction to be displayed. Accordingly, irrespective of a digital zoom magnification, it is possible to stereoscopically display an image while always maintaining an appropriate parallax.

Preferably, when the parallax adjustment amount is input to the parallax adjustment amount input device, the display device stereoscopically displays the right and left images which are trimmed based on the input parallax adjustment amount, and when the digital zoom information is input to the digital zoom information input device, the parallax adjustment amount input device inputs the parallax adjustment amount which is modified based on the input digital zoom information, and the display device stereoscopically displays the right and left images of the display range computed based on the input parallax adjustment amount.

According to a second aspect of the present invention, there is provided an image reproducing apparatus which includes: an image input device which receives right and left images having a parallax therebetween; a display device which stereoscopically displays the right and left images; a parallax adjustment amount calculation device which calculates the parallax adjustment amount on the basis of the right and left images; a shift amount computing device which computes a shift amount of each of the right and left images in a horizontal direction on the basis of the parallax adjustment amount; a display range computing device which computes a display range of each of the right and left images in the horizontal direction on the basis of the shift amount; an image cut-out device which trims the right and left images in the horizontal direction on the basis of a result of the computation by the display range computing device, and displays the trimmed images; a digital zoom information input device which receives digital zoom information of the right and left images which are stereoscopically displayed on the display device; a digital zoom device which cuts out a predetermined image region from each of the right and left images on the basis of the digital zoom information, and enlarges the cut-out predetermined image regions; and a parallax adjustment amount modification device which modifies the parallax adjustment amount on the basis of the digital zoom information.

In this image reproducing apparatus, the parallax adjustment amount is modified on the basis of the digital zoom information, the shift amount and the display range of each of the right and left images in the horizontal direction are computed on the basis of the modified parallax adjustment amount, and the right and left images are trimmed in the horizontal direction to be displayed. Accordingly, irrespective of a digital zoom magnification, it is possible to stereoscopically display an image while always maintaining an appropriate parallax. In addition, it is possible to automatically calculate the parallax adjustment amount.

Preferably, when the digital zoom information is input in the digital zoom information input device, the parallax adjustment amount calculation device calculates the shift amount based on the input digital zoom information, and the display device stereoscopically displays the right and left images of the display range computed based on the calculated shift amount.

In a further preferred form, the parallax adjustment amount calculation device calculates the parallax adjustment amount on the basis of the parallax between the right and left images.

This makes it possible to appropriately calculate the parallax adjustment amount.

Preferably, the parallax adjustment amount calculation device includes: a feature point extraction device which extracts a feature point from one image of the right and left images; a corresponding point extraction device which extracts a corresponding point from another image of the right and left images, the corresponding point corresponding to the feature point; and a parallax calculation device which calculates the parallax on the basis of the feature point and the corresponding point.

This makes it possible to appropriately calculate the parallax between the right and left images.

In a further preferred form, the feature point extraction device extracts a plurality of the feature points from the one image of the right and left images, the corresponding point extraction device extracts a plurality of the corresponding points from the another image of the right and left images, the plurality of corresponding points each corresponding to the plurality of feature points, and the parallax calculation device calculates the parallax on the basis of the plurality of feature points and the plurality of corresponding points.

This makes it possible to appropriately calculate the parallax between the right and left images.

Preferably, the digital zoom device cuts out an identical image region from each of the right and left images, and enlarges the cut-out identical image regions

This makes it possible to prevent a trouble that the cut-out regions are out of the images and to appropriately cut out and enlarge the images.

In a further preferred form, the digital zoom device cuts out an image region so that a centre of each of the right and left images and a centre of each of the cut-out image regions agrees with each other, and enlarges the cut-out image regions.

This makes it possible to appropriately cut out and enlarge the identical image regions.

Preferably, the image reproducing apparatus further includes a recording control device which records the modified parallax adjustment amount in a recording device together with the cut-out and enlarged right and left images.

This makes it possible to read out and view a desired region of the stereoscopic image in an enlarged manner from the recording device anytime.

Preferably, the image input device is a compound-eye image pickup device which obtains an image having a parallax by using a plurality of image pickup devices.

This makes it possible to digitally zoom the picked-up image on the spot.

According to a third aspect of the present invention, there is provided an image reproducing method which includes: an image input step of inputting right and left images having a parallax therebetween; a display step of stereoscopically displaying the right and left images on a display device; a parallax adjustment amount input step of inputting a parallax adjustment amount for adjusting the parallax between the right and left images; a shift amount computing step of computing a shift amount of each of the right and left images in a horizontal direction on the basis of the parallax adjustment amount; a display range computing step of computing a display range of each of the right and left images in the horizontal direction on the basis of the shift amount; an image cut-out step of trimming the right and left images in the horizontal direction on the basis of a result of the computation in the display range computing step, and displaying the trimmed images; a digital zoom information input step of inputting digital zoom information of the right and left images which are stereoscopically displayed on the display device; a digital zoom step of cutting out a predetermined image region from each of the right and left images on the basis of the digital zoom information, and enlarging the cut-out predetermined image regions; and a parallax adjustment amount modification step of modifying the parallax adjustment amount on the basis of the digital zoom information.

Preferably, when the parallax adjustment amount is input in the parallax adjustment amount input step, the right and left images; which are trimmed based on the input parallax adjustment amount, are stereoscopically displayed, and when the digital zoom information is input in the digital zoom information input step, the parallax adjustment amount which is modified based on the input digital zoom information is input in the parallax adjustment amount input step, and the right and left images of the display range computed based on the input parallax adjustment amount are stereoscopically displayed.

According to a fourth aspect of the present invention, there is provided an image reproducing method which includes: an image input step of inputting right and left images having a parallax therebetween; a display step of stereoscopically displaying the right and left images on a display device; a parallax adjustment amount calculation step of calculating the parallax adjustment amount on the basis of the right and left images; a shift amount computing step of computing a shift amount of each of the right and left images in a horizontal direction on the basis of the parallax adjustment amount; a display range computing step of computing a display range of each of the right and left images in the horizontal direction on the basis of the shift amount; an image cut-out step of trimming the right and left images in the horizontal direction on the basis of a result of the computation in the display range computing step, and displaying the trimmed images; a digital zoom information input step of inputting digital zoom information of the right and left images which are stereoscopically displayed on the display device; a digital zoom step of cutting out a predetermined image region from each of the right and left images on the basis of the digital zoom information, and enlarging the cut-out predetermined image regions; and a parallax adjustment amount modification step of modifying the parallax adjustment amount on the basis of the digital zoom information.

Preferably, when the digital zoom information is input in the digital zoom information input step, the shift amount is calculated in the shift amount computing step based on the input digital zoom information, and the right and left images of the display range computed based on the calculated shift amount are stereoscopically displayed.

According to the present invention, it is possible to prevent an adjustment effect of the stereoscopic effect obtained by the parallax adjustment from being impaired by performing a digital zoom.

Preferred embodiments of the invention will now be described by way of example only and with reference to the accompanying drawings, in which:

Fig. 1 is a diagram illustrating a conventional digital zoom;

Figs. 2A and 2B are diagrams illustrating a concept of a stereoscopic view of the conventional digital zoom;

Fig. 3 is a diagram for describing a conventional cut-out region;

Fig. 4 is a diagram for describing the conventional cut-out region;

Fig. 5 is a diagram illustrating an overall configuration of an image reproducing apparatus;

Fig. 6 is a diagram illustrating a detailed configuration of a parallax control unit;

Figs. 7A, 7B, and 7C are diagrams for describing a parallax amount d between right and left images;

Figs. 8A, 8B, and 8C are diagrams for describing shift amounts of the right and left images and a display range of a stereoscopic image;

Fig. 9 is a diagram for describing the display ranges before and after a digital zoom;

Fig. 10 is a flowchart showing an operation of the image reproducing apparatus;

Fig. 11 is a diagram illustrating an overall configuration of another image reproducing apparatus;

Fig. 12 is a diagram illustrating a detailed configuration of a parallax adjustment amount computing unit;
Figs. 13A and 13B are diagrams for describing detection of a feature point and a corresponding point; and
Fig. 14 is a flowchart showing an operation of the another image reproducing apparatus.

Hereinafter, modes for carrying out the present invention are described with reference to the accompanying drawings.

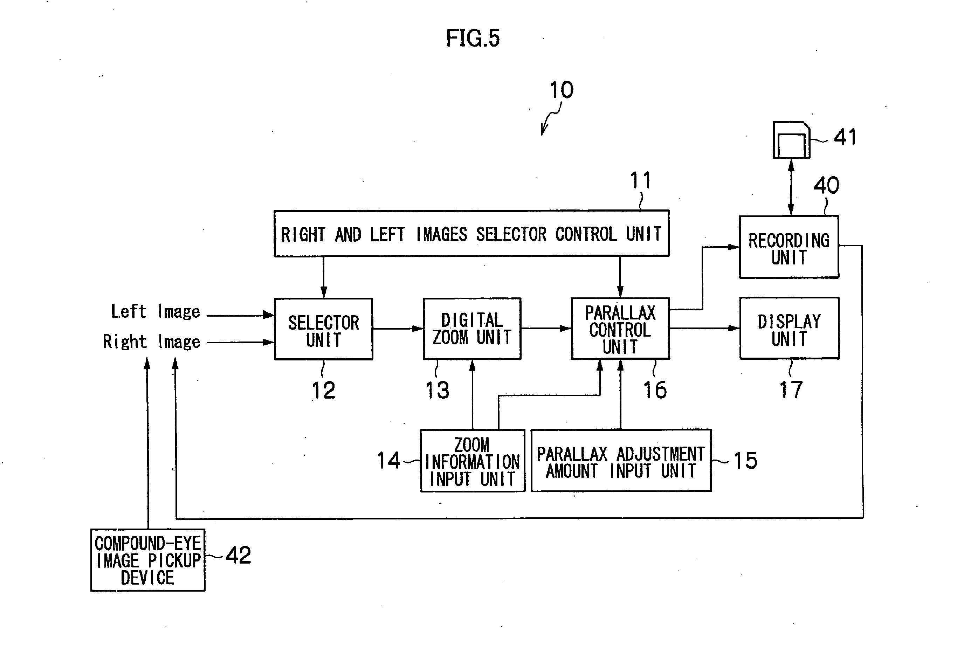

An image reproducing apparatus 10 according to a first embodiment of the present invention is an apparatus which stereoscopically displays inputted right and left images having a parallax therebetween on a display unit 17. Fig. 5 is a diagram illustrating an overall configuration of the image reproducing apparatus 10. As illustrated in Fig. 5, the image reproducing apparatus 10 includes a right and left images selector control unit 11, a selector unit 12, a digital zoom unit 13, a zoom information input unit 14, a parallax adjustment amount input unit 15, a parallax control unit 16, and the display unit 17.

The right and left images selector control unit 11 controls which one of a left image and a right image is to be processed by the selector unit 12 and the parallax control unit 16. Data of the left image and data of the right image to be stereoscopically displayed on the display unit 17 are inputted to the selector unit 12, and any one of the left image and the right image is outputted in accordance with a signal from the right and left images selector control unit 11. It should be noted that the left image and the right image which are inputted to the selector unit 12 may be images which are read out from a recording medium 41 inserted into a recording unit 40 and may also be images Which are picked up by a right image pickup part and a left image pickup part of a compound-eye image pickup device 42.

The image reproducing apparatus 10 can enlargedly display the stereoscopic image displayed on the display unit 17 by a so-called electronic zoom, and a user can designate a desired zoom magnification through the zoom information input unit 14.

The digital zoom unit 13 cuts out a predetermined region of each of the right and left images in accordance with the zoom magnification inputted from the zoom information input unit 14, and enlarges the cut-out images to the original image size. At this time, the image regions are cut out so that the centre of each image before the cut-out and the centre of each cut-out image region agree with each other. In this manner, the cut-out positions of the right and left images are set to be the same positions with the centres of the images being as a reference, to thereby prevent a trouble.that the cut-out regions are out of the images.

The parallax adjustment amount input unit 15 is an operation unit through which the user inputs a desired parallax adjustment amount. In the image reproducing apparatus 10, when the stereoscopic image based on the left image and the right image is displayed on the display unit 17, on the basis of the parallax adjustment amount set by the user using the parallax adjustment amount input unit 15, the user can create a parallax between the right and left images while viewing the right and left images or viewing the stereoscopic image. This makes it possible to adjust the parallax of the stereoscopic image to a desired parallax of the user.

The parallax control unit 16 adjusts the parallax of a zoomed image outputted from the digital zoom unit 13 on the basis of the parallax adjustment amount information inputted from the parallax adjustment amount input unit 15 and the zoom magnification information inputted from the zoom information input unit 14, and outputs the adjusted image to the display unit 17. In addition, in a case where the magnification of the digital zoom is changed by the zoom information input unit 14 after the parallax adjustment, the parallax control unit 16 calculates the parallax adjustment amount on the basis of the parallax adjustment amount information, which is already inputted from the parallax adjustment amount input unit 15, so that the ratio of the parallaxes before and after the digital zoom is not changed irrespective of the parallax adjustment.

It should be noted that a select signal is inputted from the right and left images selector control unit 11 to the parallax control unit 16, and hence the parallax control unit 16 can recognize whether the zoomed image inputted from the digital zoom unit 13 is a left image or a right image. Such a configuration enables a processing block to be shared for performing the processing of the left image and the processing of the right image.

The display unit 17 is a three-dimensional monitor which can stereoscopically display the right and left images inputted from the parallax control unit 16. For example, a monitor of a parallax barrier type or a lenticular lens type can be used as the display unit 17.

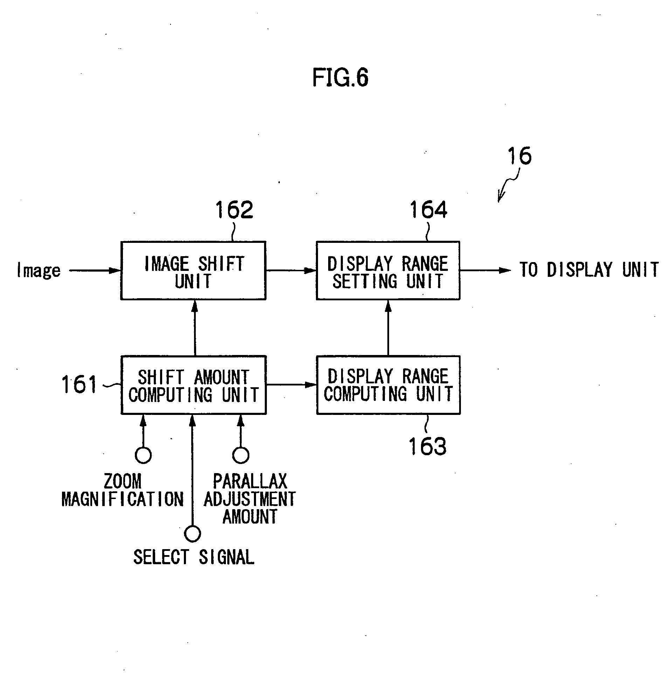

Fig. 6 is a diagram illustrating a detailed configuration of a parallax control unit 16. As illustrated in Fig. 6, the parallax control unit 16 includes a shift amount computing unit 161, an image shift unit 162, a display range computing unit 163, and a display range setting unit 164.

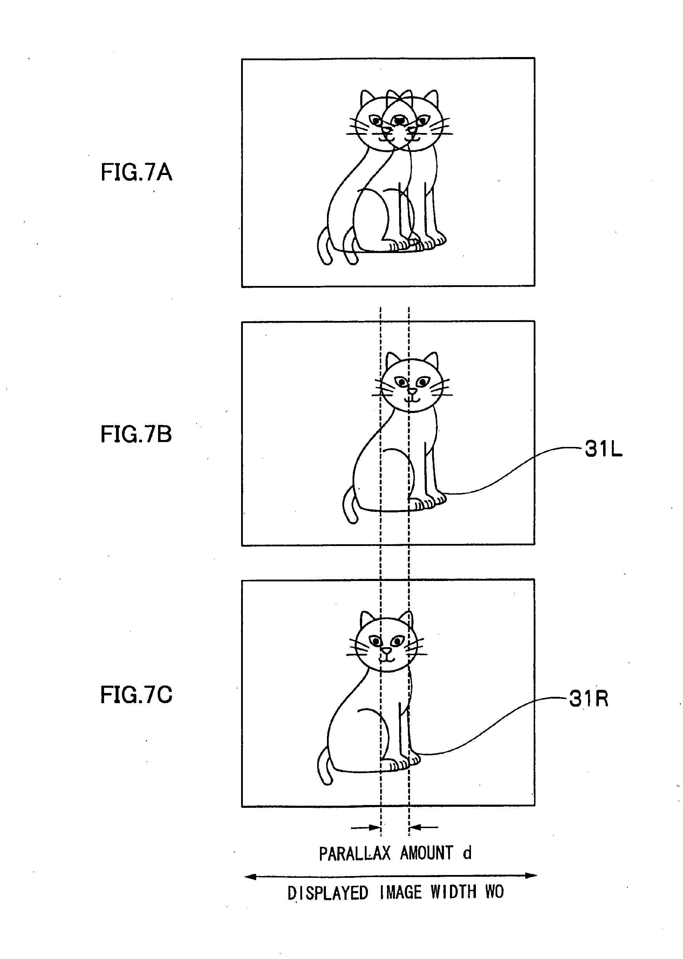

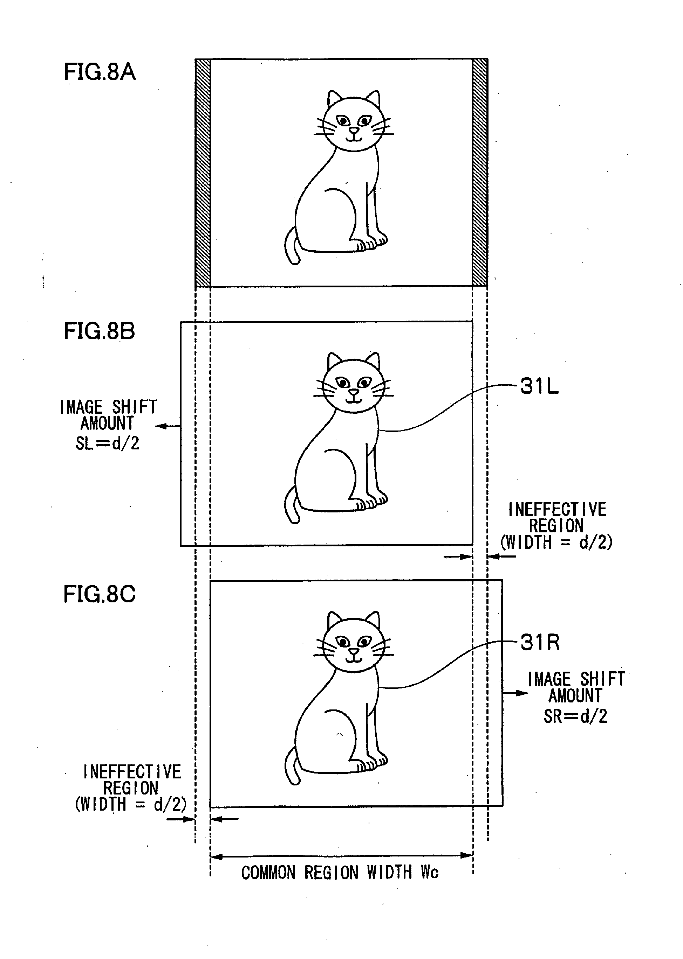

With reference to Figs. 7A, 7B, and 7C and Figs. 8A, 8B, and 8C, the operation of the parallax control unit 16 illustrated in Fig. 6 is described. Here, a description is given of a case as an example in which the parallax of a subject having a parallax d on a display plane is made zero.

A left image 31 L on a left image illustrated in Fig. 7B and a right image 31 R on a right image illustrated in Fig. 7C have a parallax amount d therebetween. On the basis of these two images, the image reproducing apparatus 10 displays a stereoscopic image on the display unit 17 as illustrated in Fig. 7A. It should be noted that a displayed image width on the display unit 17 is expressed by WO.

Here, a case in which the parallax adjustment amount = -d is inputted from the parallax adjustment amount input unit 15 is considered. In order to adjust the parallax amount between the left image illustrated in Fig. 7B and the right image illustrated in Fig. 7C by -d, that is, to make the parallax amount d zero, assuming that the right direction in the figures is a positive direction (plus direction), the left image may be shifted horizontally in a negative direction (minus direction) by SL = d/2 as illustrated in Fig. 8B, and the right image may be shifted horizontally in the positive direction (plus direction) by SR = d/2 as illustrated in Fig. 8C. That is, the right and left images may be shifted horizontally in the directions opposite to each other (positive direction and negative direction) by 1/2 of the parallax adjustment amount. On this occasion, in the case where the parallax adjustment amount is negative, the left image is shifted horizontally in the negative direction, and the right image is shifted horizontally in the positive direction. In the case where the parallax adjustment amount is positive, the left image is shifted horizontally in the positive direction, and the right image is shifted horizontally in the negative direction.

However, when the right and left images are horizontally shifted as described above, ineffective regions containing no image data are generated on the left side of the left image and on the right side of the right image. (In the case where the parallax adjustment amount is positive, the ineffective regions are generated on the right side of the left image and on the left side of the right image.) Therefore, the image reproducing apparatus 10 calculates a common region of the right and left images after shifting the images, and stereoscopically displays only the common part as illustrated in Fig. 8A. The horizontal width of the images on the display plane is W0 in the example illustrated in Figs. 8A to 8C, and hence the common region Wc of the right and left images can be expressed as W0-d.

In this manner, in the parallax control unit 16, the shift amount computing unit 161 computes the horizontal shift amount (d/2) of the images according to the inputted parallax adjustment amount (-d), and the image shift unit 162 horizontally shifts the right and left images on the basis of the shift amount (d/2) computed by the shift amount computing unit 161.

Further, the display range computing unit 163 calculates the common region Wc on the basis of the shift amount (d/2), and the display range setting unit 164 trims, in the horizontal direction, the images inputted from the image shift unit 162 on the basis of the calculated common region Wc and outputs the trimmed images to the display unit 17.

Next, the digital zoom of a stereoscopic image will be described.

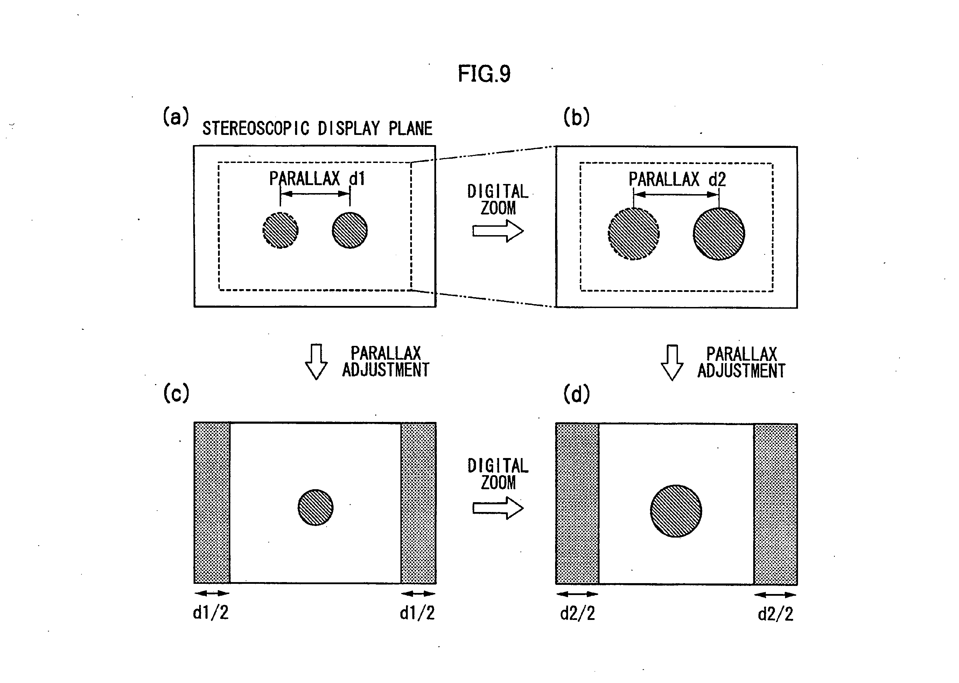

When the digital zoom of a stereoscopic image is performed from the state illustrated in portion (a) of Fig. 9 to the state illustrated in portion (b) of Fig. 9, a parallax amount on the display plane changes. As illustrated in portions (a), (b) of Fig. 9, in a case where the parallax amount before the digital zoom is d1, when an N times digital zoom is performed, the parallax amount after the digital zoom is d2 = d1xN. As described above, there is a possibility that such a parallax amount after the digital zoom is not appropriate for a stereoscopic view.

Here, attention is focused on adjusting the parallax. For example, a case in which the parallax between the right and left images is adjusted to be zero in order to reduce an excessive projection or recess of a stereoscopic image is considered.

In order to make the parallax between the right and left images zero, in the case where the parallax amount before the zoom is d1, the right and left images are shifted horizontally in the positive and negative directions, respectively, by d1/2 as illustrated in portion (c) of Fig. 9, and the display range is set to w-d1. Similarly, in the case where the parallax amount after the zoom is d2, the right and left images are shifted horizontally in the positive and negative directions, respectively, by d2/2 as illustrated in portion (d) of Fig. 9, and then the display range is set to w-d2.

In consideration of the above, it can be understood that, when the digital zoom of the stereoscopic image whose parallax has been adjusted is performed, it is necessary to calculate again the shift amounts and the display ranges of the right and left images in accordance with the parallax adjustment amount and the digital zoom magnification. Here, a horizontal shift amount S after the digital zoom and the display range Wc after the digital zoom are expressed as follows.

$$S = d2/2 = (d1 \times N)/2$$

$$Wc = W - d2 = W - d1 \times N$$

In addition, in a state where an original image has already been subjected to an N3 times digital zoom, an image shift based on a parallax amount d3, and limitation of the display range, the digital zoom is further performed thereon, to thereby perform such a control that the zoom magnification becomes N4 with respect to the original image. In this case, a parallax amount d4 after the zoom, a horizontal shift amount S4 after the zoom, and a display range Wc4 after the zoom are expressed as follows.

$$d4 = d3 \times N4/N3$$

$$S4 = d4/2 = (d3 \times N4)/(2 \times N3)$$

$$Wc4 = W\text{-}d4$$

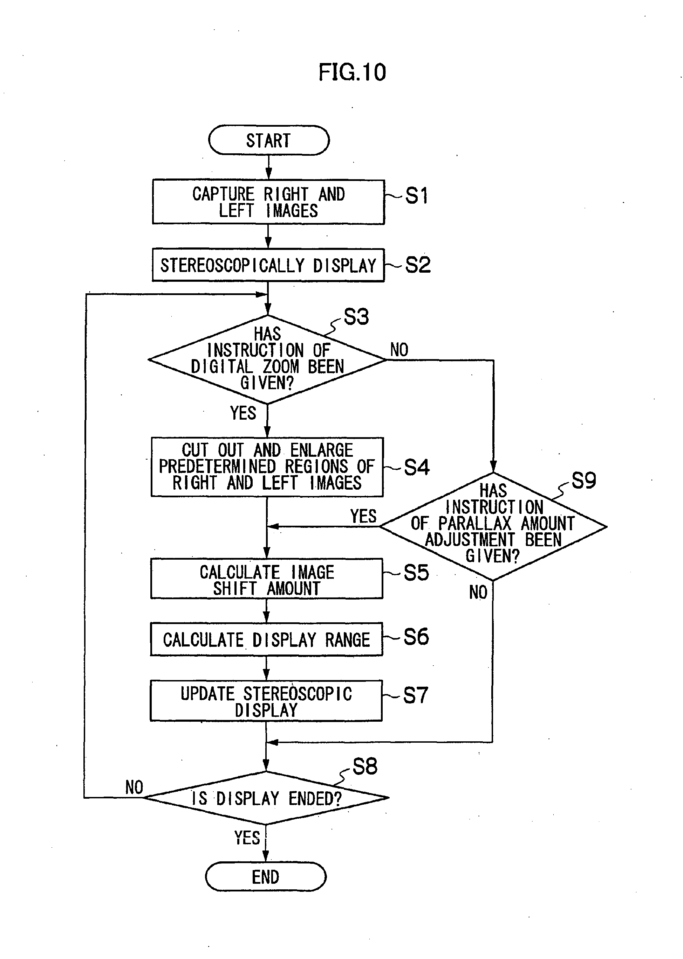

Next, the operations of the parallax adjustment and the digital zoom by the image reproducing apparatus 10 are described with reference to the flowchart of Fig. 10.

At first, right and left images are captured (Step S1). As described above, the right and left images may be read out from a recording medium or may also be obtained from a compound-eye image pickup device. From the inputted right and left images, a predetermined stereoscopic image is created by the parallax control unit 16 on the basis of a designated zoom magnification and a designated parallax adjustment amount, and is stereoscopically displayed on the display unit 17 (Step S2). Here, it is assumed that the zoom magnification is designated to 1 and the parallax adjustment amount is designated to 0 as initial values thereof.

Next, it is determined whether or not an instruction of the digital zoom has been given by the zoom information input unit 14 (Step S3).

In a case where the instruction of the digital zoom has not been given, the processing proceeds to Step S9, and it is determined whether or not an instruction of the parallax adjustment has been given by the parallax adjustment amount input unit 15.

In a case where the instruction of the parallax adjustment has been given, an image shift amount is calculated by the shift amount computing unit 161 of the parallax control unit 16 on the basis of the instructed parallax adjustment amount (Step S5). Further, a display range is calculated by the display range computing unit 163 on the basis of the calculated image shift amount (Step S6).

The display range setting unit 164 trims the right and left images in the horizontal direction on the basis of the calculation results, and outputs the trimmed images to the display unit 17. The display unit 17 updates a display content of the display unit 17 on the basis of the output of the parallax control unit 16 (Step S7).

In this manner, the stereoscopic image whose parallax has been adjusted to the instructed parallax adjustment amount is displayed on the display unit 17. That is, a user can view a stereoscopic image having an appropriate parallax by giving an instruction of the parallax adjustment amount at which the user can stereoscopically view the image easily. In addition, because only the common region of the right and left images is displayed, an image which causes the user an uncomfortable feeling, for example, an image in which a planar image and a stereoscopic image are mixed, is not created.

On the other hand, in a case where the instruction of the digital zoom has been given in Step S3, the digital zoom unit 13 cuts out each of the right and left images in accordance with the instructed zoom magnification with the centre of each image being used as a reference, and enlarges the cut-out images to the original image size (Step S4).

Because the display of the stereoscopic image is updated on the basis of the instructed parallax amount in Step S9 described above, the stereoscopic image on the display unit 17 has been adjusted to have an appropriate parallax amount. However, there is a possibility that the parallax amount of the stereoscopic image after the digital zoom is not appropriate for a stereoscopic view. Therefore, the shift amount computing unit 161 of the parallax control unit 16 calculates an appropriate parallax amount of the stereoscopic image after the digital zoom on the basis of the designated zoom magnification and a currently set parallax adjustment amount, and calculates an image shift amount on the basis of the calculated appropriate parallax amount (Step S5). Further, the display range computing unit 163 calculates a display range on the basis of the calculated image shift amount (Step S6).

The display range setting unit 164 trims the right and left images in the horizontal direction on the basis of the calculation results, and outputs the trimmed images to the display unit 17. The display unit 17 updates a display content of the display unit 17 on the basis of the output of the parallax control unit 16 (Step S7).

In this manner, the stereoscopic image which has been digitally zoomed at the designated zoom magnification is displayed on the display unit 17. The parallax amount of this stereoscopic image is not an amount which is determined by enlarging the parallax before the digital zoom enlargement in accordance with the zoom magnification, but is set to the appropriate parallax amount. Therefore, even when the digital zoom is performed, the user can view the stereoscopic image which maintains an appropriate stereoscopic effect.

Lastly, it is determined whether or not the display is ended (Step S8). In a case where the display is not ended, the processing returns to Step S3, and the same processing is repeated.

It should be noted that the image which is digitally zoomed in this manner may be recorded in a recording medium (not shown). In the case of such a recording, information of the parallax adjustment amount is recorded together with the cut-out (zoomed) right and left images. The information of the parallax adjustment amount is recorded as supplementary information of the right image. It should be noted that the information of the parallax adjustment amount may be recorded as supplementary information of the left image or may be recorded as supplementary information of both the images.

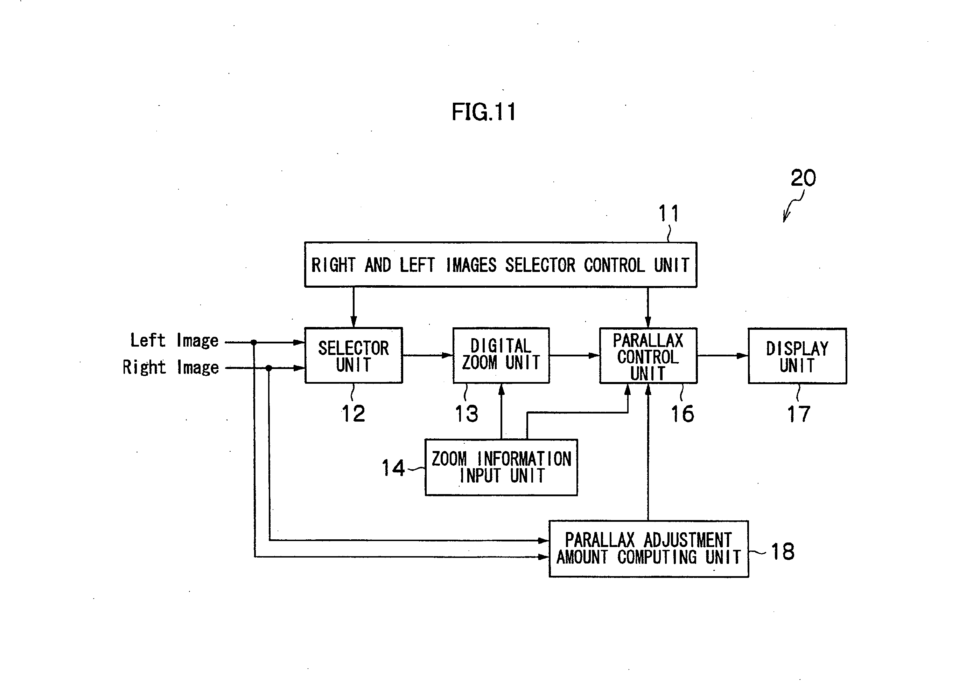

Fig. 11 is a diagram illustrating an overall configuration of an image reproducing apparatus 20 according to a second embodiment of the present invention. It should be noted that components common to Fig. 5 are designated by identical reference numerals, and detailed description thereof is omitted. The image reproducing apparatus 20 is different from the image reproducing apparatus 10 of the first embodiment in that the image reproducing apparatus 20 includes a parallax adjustment amount computing unit 18 instead of the parallax adjustment amount input unit 15.

The parallax adjustment amount computing unit 18 computes an appropriate parallax adjustment amount on the basis of the parallax between the left image and the right image. The calculated parallax adjustment amount is inputted to the parallax control unit 16. The parallax control unit 16 has the same configuration as that in Fig. 6, and calculates the shift amounts and the display ranges of the right and left images.

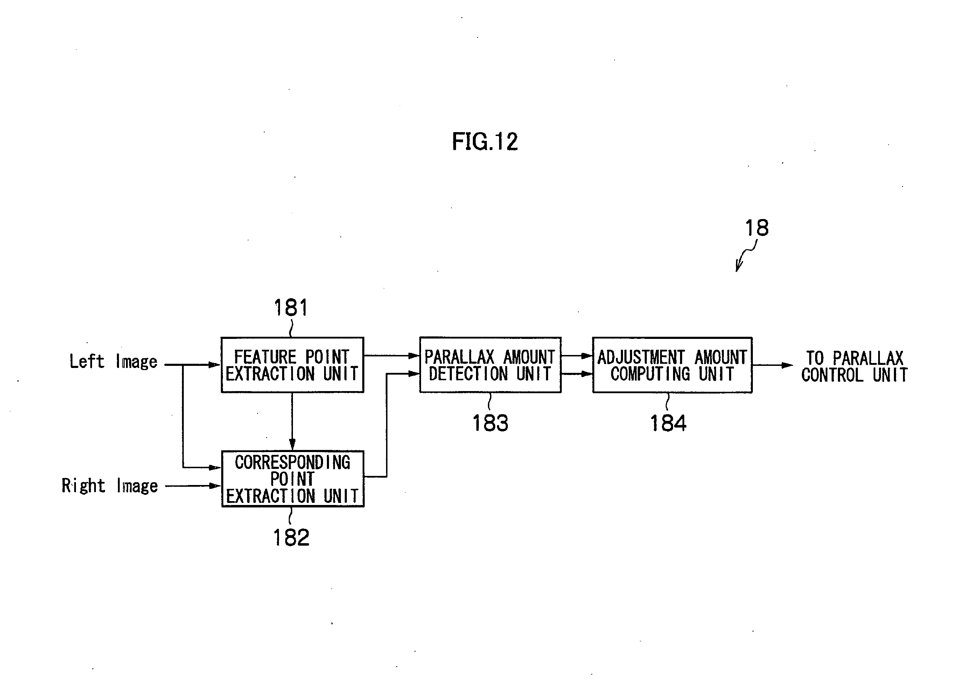

Fig. 12 is a diagram illustrating a detailed configuration of the parallax adjustment amount computing unit 18. As illustrated in Fig. 12, the parallax adjustment amount computing unit 18 includes a feature point extraction unit 181, a corresponding point extraction unit 182, a parallax amount detection unit 183, and an adjustment amount computing unit 184.

In order to obtain the parallax adjustment amount, it is first required to detect a parallax amount generated between the right and left images. There are a variety of methods of detecting the parallax amount, and in the present embodiment, the parallax amount is detected by using a feature point-corresponding point detection. It should be noted that the method of detecting the parallax amount is not limited thereto, and any suitable method may be used.

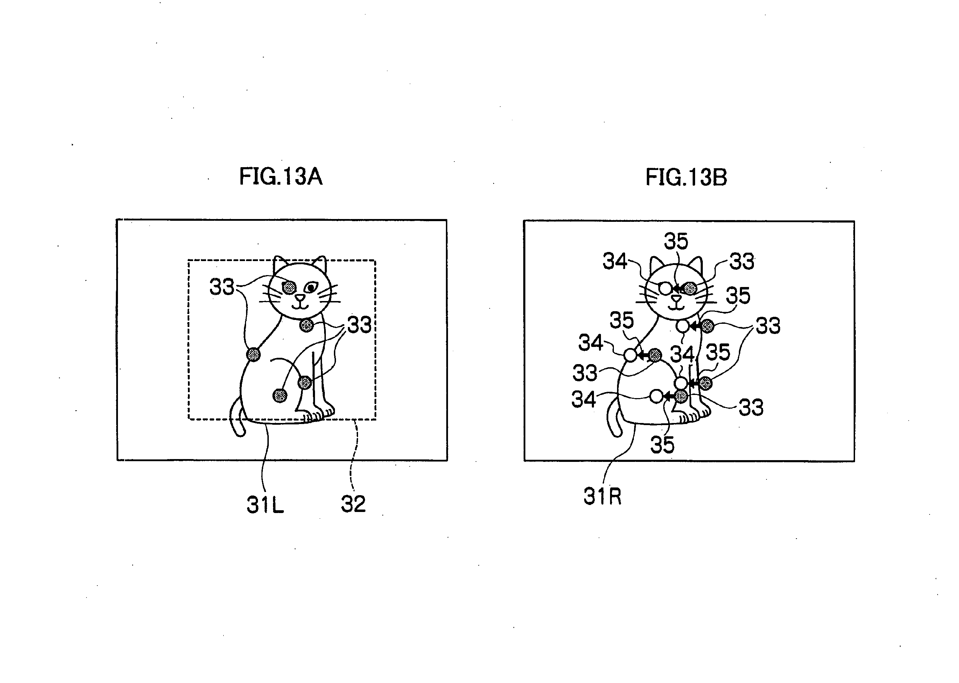

The feature point extraction unit 181 extracts a plurality of feature points from a predetermined region of the inputted left image. The feature point is a point (pixel) having strong signal gradients in a plurality of directions, and is extracted with the use of, for example, a Harris method or a Shi-Tomasi method. As a result of extracting the feature points, coordinate values $(x_i, y_i)$ (where i indicates a number) of the plurality of feature points are obtained. For example, as illustrated in Fig. 13A, five feature points 33 are extracted from a screen centre 32. It should be noted that, in the present embodiment, the feature points are extracted from the screen centre, but a target region from which the feature points are extracted is not limited to the screen centre. For example, the feature points may be extracted from an entire image.

In addition, the corresponding point extraction unit 182 detects, from the right image, corresponding points 34 corresponding to the respective feature points 33 $(x_i, y_i)$ extracted by the feature point extraction unit 181. As a result of detecting the corresponding points, coordinate values $(X_i, Y_i)$ of the corresponding points 34 corresponding to the respective feature points 33 are obtained. For example, as illustrated in Fig. 13B, the five corresponding points 34 corresponding to the five feature points 33 are extracted.

The parallax amount detection unit 183 detects the parallax amounts from the extracted feature points 33 and the corresponding points 34 corresponding to the respective feature points 33. As illustrated in Fig. 13B, a horizontal component of a line segment 35 connecting each feature point 33 and each corresponding point 34 is the parallax amount generated at a position of the feature point 33, and a horizontal parallax amount $d_i$ can be expressed as $d_i = X_i - x_i$. The unit of the horizontal parallax amount is a pixel. It should be noted that examples of the method of detecting the corresponding points 34 include a method of using, as a template, image information around the feature points within a window to thereby perform template matching, a Lucas-Kanade method, and the like, but the method of detecting the corresponding points 34 is not limited to these.

Further, the parallax amount detection unit 183 analyses the plurality of detected parallax amounts $d_i$ to calculate a parallax D between the right and left images. Examples of conceivable methods for computing the parallax D include a simple average method ($D = \Sigma d_i / i$), a method of using a median, a method of determining, as the parallax D, a parallax amount $d_i$ indicative of being located on the nearest side or conversely a parallax amount $d_i$ indicative of being located on the farthest side among the plurality of parallax amounts $d_i$, and the like, and the method adopted may be decided as appropriate.

The adjustment amount computing unit 184 calculates a parallax adjustment amount which is appropriate for a user to stereoscopically view an image, on the basis of the parallax D between the right and left images. The calculated parallax adjustment amount is inputted to the parallax control unit 16.

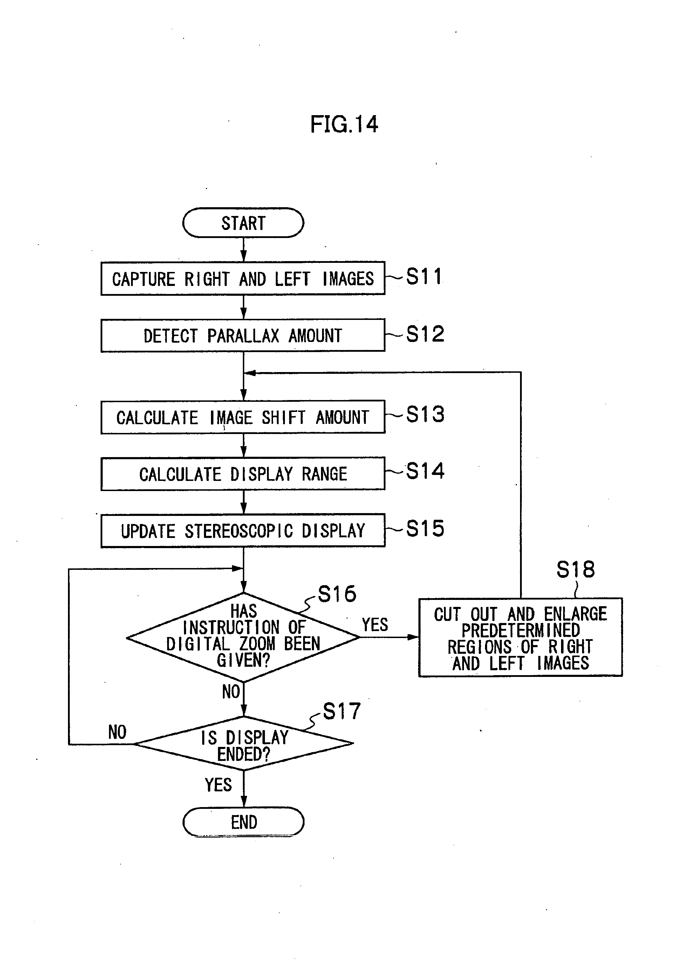

Next, the operations of the parallax adjustment and the digital zoom by the image reproducing apparatus 20 having the configuration as described above are described with reference to the flowchart of Fig. 14.

First, right and left images are captured (Step S11), and a parallax amount between the right and left images is detected by the parallax amount detection unit 183 of the parallax adjustment amount computing unit 18 (Step S12). For detecting the parallax amount, the parallax D between the right and left images may be calculated as described above. The adjustment amount computing unit 184 calculates a parallax adjustment amount on the basis of the parallax D.

The shift amount computing unit 161 of the parallax control unit 16 calculates an image shift amount on the basis of the zoom magnification instructed by the zoom information input unit 14 and the parallax adjustment amount calculated by the parallax adjustment amount computing unit 18 (Step S13). Further, the display range computing unit 163 calculates a display range (Step S14).

The display range setting unit 164 trims the right and left images in the horizontal direction on the basis of the calculated display range, and outputs the trimmed images to the display unit 17. These images are stereoscopically displayed on the display unit 17 (Step S15).

Next, it is determined whether or not an instruction of the digital zoom has been given by the zoom information input unit 14 (Step S16).

In a case where the instruction of the digital zoom has been given, the digital zoom unit 13 cuts out and enlarges predetermined regions of the right and left images in accordance with the instructed zoom magnification (Step S18), and the processing proceeds to Step S13.

The stereoscopic image on the display unit 17 has been adjusted by the parallax adjustment amount computing unit 18 so as to have an appropriate parallax amount. However, there is a possibility that the parallax amount of the stereoscopic image after the digital zoom is not appropriate for a stereoscopic view. Therefore, the shift amount computing unit 161 of the parallax control unit 16 calculates an appropriate parallax amount of the stereoscopic image after the digital zoom on the basis of the instructed zoom magnification and a currently set parallax adjustment amount, and calculates an image shift amount on the basis of the calculated appropriate parallax amount (Step S13). Further, the display range computing unit 163 calculates a display range on the basis of the calculated image shift amount (Step S14).

As a result, the stereoscopic image is displayed on the display unit 17 at the newly instructed zoom magnification (Step S15). The parallax amount of this stereoscopic image is set to the appropriate parallax amount. Therefore, even when the digital zoom is performed, the user can view the stereoscopic image which maintains an appropriate stereoscopic effect.

**Claims**

1. An image reproducing apparatus (10), **characterized by** comprising:

an image input device (12) which receives right and left images having a parallax therebetween;
a display device (17) which stereoscopically displays the right and left images;
a parallax adjustment amount input device (15) which receives a parallax adjustment amount for adjusting the parallax between the right and left images;
a shift amount computing device (16, 161) which computes a shift amount of each of the right and left images in a horizontal direction on the basis of the parallax adjustment amount;
a display range computing device (16, 163) which computes a display range of each of the right and left images in the horizontal direction on the basis of the shift amount;
an image cut-out device (16, 164) which trims the right and left images in the horizontal direction on the basis of a result of the computation by the display range computing device, and displays the trimmed images;
a digital zoom information input device (14) which receives digital zoom information of the right and left images which are stereoscopically displayed on the display device (17);
a digital zoom device (13) which cuts out a predetermined image region from each of the right and left images on the basis of the digital zoom information, and enlarges the cut-out predetermined image regions; and
a parallax adjustment amount modification device which modifies the parallax adjustment amount on the basis of the digital zoom information.

2. The image reproducing apparatus (10) according to claim 1, wherein
when the parallax adjustment amount is input to the parallax adjustment amount input device (15), the display device (17) stereoscopically displays the right and left images which are trimmed based on the input parallax adjustment amount, and
when the digital zoom information is input to the digital zoom information input device (14), the parallax adjustment amount input device (15) inputs the parallax adjustment amount which is modified based on the input digital zoom
information, and the display device (17) stereoscopically displays the right and left images of the display range computed based on the input parallax adjustment amount.

3. An image reproducing apparatus (20), **characterized by** comprising:

an image input device (12) which receives right and left images having a parallax therebetween;
a display device (17) which stereoscopically displays the right and left images;
a parallax adjustment amount calculation device (18) which calculates the parallax adjustment amount on the basis of the right and left images;
a shift amount computing device (16, 161) which computes a shift amount of each of the right and left images in a horizontal direction on the basis of the parallax adjustment amount;
a display range computing device (16, 163) which computes a display range of each of the right and left images in the horizontal direction on the basis of the shift amount;
an image cut-out device (16, 164) which trims the right and left images in the horizontal direction on the basis of a result of the computation by the display range computing device (16, 163), and displays the trimmed images;
a digital zoom information input device (14) which receives digital zoom information of the right and left images which are stereoscopically displayed on the display device (17);
a digital zoom device (13) which cuts out a predetermined image region from each of the right and left images on the basis of the digital zoom information, and enlarges the cut-out predetermined image regions; and

a parallax adjustment amount modification device (16) which modifies the parallax adjustment amount on the basis of the digital zoom information.

4. The image reproducing apparatus (20) according to claim 3, wherein
when the digital zoom information is input in the digital zoom information input device (14), the parallax adjustment amount calculation device (18) calculates the shift amount based on the input digital zoom information, and the display device (17) stereoscopically displays the right and left images of the display range computed based on the calculated shift amount.

5. The image reproducing apparatus according to claim 3 or 4, wherein the parallax adjustment amount calculation device (18) calculates the parallax adjustment amount on the basis of the parallax between the right and left images.

6. The image reproducing apparatus (20) according to any one of claims 3 to 5, wherein the parallax adjustment amount calculation device (18) comprises:

   a feature point extraction device (181) which extracts a feature point from one image of the right and left images;
   a corresponding point extraction device (182) which extracts a corresponding point from another image of the right and left images, the corresponding point corresponding to the feature point; and
   a parallax calculation device (183) which calculates the parallax on the basis of the feature point and the corresponding point.

7. The image reproducing apparatus (20) according to claim 6, wherein:

   the feature point extraction device (181) extracts a plurality of the feature points from the one image of the right and left images;
   the corresponding point extraction device (182) extracts a plurality of the corresponding points from the another image of the right and left images, the plurality of corresponding points each corresponding to the plurality of feature points; and
   the parallax calculation device (183) calculates the parallax on the basis of the plurality of feature points and the plurality of corresponding points.

8. The image reproducing apparatus (20) according to any preceding claim, wherein the digital zoom device (13) cuts out an identical image region from each of the right and left images, and enlarges the cut-out identical image regions.

9. The image reproducing apparatus (20) according to claim 8, wherein the digital zoom device (13) cuts out an image region so that a centre of each of the right and left images and a centre of each of the cut-out image regions agrees with each other, and enlarges the cut-out image regions.

10. The image reproducing apparatus (20) according to any preceding claim, further comprising a recording control device (40) which records the modified parallax adjustment amount in a recording device (41) together with the cut-out and enlarged right and left images.

11. The image reproducing apparatus (20) according to any preceding claim, wherein the image input device is a compound-eye image pickup device (42) which obtains an image having a parallax by using a plurality of image pickup devices (42).

12. An image reproducing method, **characterized by** comprising:

   an image input step (S1) of inputting right and left images having a parallax therebetween;
   a display step (S2) of stereoscopically displaying the right and left images on a display device (17);
   a parallax adjustment amount input step (S9) of inputting a parallax adjustment amount for adjusting the parallax between the right and left images;
   a shift amount computing step (S5) of computing a shift amount of each of the right and left images in a horizontal direction on the basis of the parallax adjustment amount;
   a display range computing step (S6) of computing a display range of each of the right and left images in the horizontal direction on the basis of the shift amount;
   an image cut-out step (S7) of trimming the right and left images in the horizontal direction on the basis of a result of the computation in the display range computing step, and displaying the trimmed images;
   a digital zoom information input step (S3) of inputting digital zoom information of the right and left images which are stereoscopically displayed on the display device;
   a digital zoom step (S4) of cutting out a predetermined image region from each of the right and left images on the basis of the digital zoom information, and enlarging the cut-out predetermined image regions; and
   a parallax adjustment amount modification step (S5) of modifying the parallax adjustment amount on the basis of the digital zoom information.

**13.** The image reproducing method according to claim 12, wherein
when the parallax adjustment amount is input in the parallax adjustment amount input step (S9), the right and left images, which are trimmed based on the input parallax adjustment amount, are stereoscopically displayed, and
when the digital zoom information is input in the digital zoom information input step (S3), the parallax adjustment amount which is modified based on the input digital zoom information is input in the parallax adjustment amount input step (S9), and the right and left images of the display range computed based on the input parallax adjustment amount are stereoscopically displayed.

**14.** An image reproducing method, **characterized by** comprising:

an image input step (S11) of inputting right and left images having a parallax therebetween;
a display step of stereoscopically displaying the right and left images on a display device;
a parallax adjustment amount calculation step (S12) of calculating the parallax adjustment amount on the basis of the right and left images;
a shift amount computing step (S13) of computing a shift amount of each of the right and left images in a horizontal direction on the basis of the parallax adjustment amount;
a display range computing step (S14) of computing a display range of each of the right and left images in the horizontal direction on the basis of the shift amount;
an image cut-out step (S15) of trimming the right and left images in the horizontal direction on the basis of a result of the computation in the display range computing step (S14), and displaying the trimmed images;
a digital zoom information input step (S16) of inputting digital zoom information of the right and left images which are stereoscopically displayed on the display device (17);
a digital zoom step (S18) of cutting out a predetermined image region from each of the right and left images on the basis of the digital zoom information, and enlarging the cut-out predetermined image regions; and
a parallax adjustment amount modification step (S13) of modifying the parallax adjustment amount on the basis of the digital zoom information.

**15.** The image reproducing method according to claim 14, wherein

when the digital zoom information is input in the digital zoom information input step (S16), the shift amount is calculated in the shift amount computing step (S13) based on the input digital zoom information, and the right and left images of the display range computed based on the calculated shift amount are stereoscopically displayed.

# FIG.1

(a)

STEREOSCOPIC
DISPLAY PLANE 103

PARALLAX da

101R 101L

DIGITAL ZOOM

(b)

PARALLAX db

102R 102L

## FIG.2A

101R    101L

~100a

110L        110R

## FIG.2B

102R        102L

~100b

110L        110R

# FIG.3

(a)

STEREOSCOPIC DISPLAY PLANE

100a

→ STEREOSCOPIC DISPLAY

(c)

LEFT IMAGE 101L    101R RIGHT IMAGE

104L    104R

DIGITAL ZOOM

(b)

100c

→ STEREOSCOPIC DISPLAY

(d)

105L    105R

# FIG.4

EP 2 280 554 A2

(a)

STEREOSCOPIC DISPLAY PLANE

100a

(c)

LEFT IMAGE 101L 101R RIGHT IMAGE

STEREOSCOPIC
DISPLAY

106L 106R

DIGITAL ZOOM

(b)

100c

STEREOSCOPIC
DISPLAY

(d)

107L 107R

# FIG.5

RIGHT AND LEFT IMAGES SELECTOR CONTROL UNIT — 11

Left Image →

Right Image →

SELECTOR UNIT — 12

DIGITAL ZOOM UNIT — 13

PARALLAX CONTROL UNIT — 16

RECORDING UNIT — 40

DISPLAY UNIT — 17

41

10

14 — ZOOM INFORMATION INPUT UNIT

PARALLAX ADJUSTMENT AMOUNT INPUT UNIT — 15

COMPOUND-EYE IMAGE PICKUP DEVICE — 42

EP 2 280 554 A2

# FIG.6

162                                              164

┌─────────────┐        ┌─────────────┐
Image ──────→│ IMAGE SHIFT │───────→│DISPLAY RANGE│───→ TO DISPLAY UNIT
             │    UNIT     │        │SETTING UNIT │
             └─────────────┘        └─────────────┘
                    ↑                       ↑
┌─────────────┐        ┌─────────────┐
161 ～│SHIFT AMOUNT │───────→│DISPLAY RANGE│
             │COMPUTING UNIT│       │COMPUTING UNIT│
             └─────────────┘        └─────────────┘
             ↑    ↑    ↑                   163
             
         ○         ○
       ZOOM      PARALLAX
    MAGNIFICATION  ADJUSTMENT
                   AMOUNT
              ○
         SELECT SIGNAL

16

EP 2 280 554 A2

FIG.7A

FIG.7B

31L

FIG.7C

31R

PARALLAX AMOUNT d

DISPLAYED IMAGE WIDTH WO

FIG.8A

FIG.8B

IMAGE SHIFT
AMOUNT
SL=d/2

31L

INEFFECTIVE
REGION
(WIDTH = d/2)

FIG.8C

31R

IMAGE SHIFT
AMOUNT
SR=d/2

INEFFECTIVE
REGION
(WIDTH = d/2)

COMMON REGION WIDTH Wc

FIG.9

(a) STEREOSCOPIC DISPLAY PLANE — PARALLAX d1

(b) PARALLAX d2

DIGITAL ZOOM

(c) PARALLAX ADJUSTMENT — d1/2, d1/2

(d) PARALLAX ADJUSTMENT — d2/2, d2/2

DIGITAL ZOOM

# FIG.10

```
                    ┌──────────────┐
                    │    START     │
                    └──────┬───────┘
                           │
                           ▼
            ┌──────────────────────────┐
            │   CAPTURE RIGHT AND      │ ～S1
            │      LEFT IMAGES         │
            └──────────┬───────────────┘
                       │
                       ▼
            ┌──────────────────────────┐
            │ STEREOSCOPICALLY DISPLAY │ ～S2
            └──────────┬───────────────┘
                       │
                       ▼
                    ╱╲ ～S3
                   ╱   ╲
                  ╱ HAS  ╲
       ┌────────╱INSTRUCTION OF╲────── NO
       │        ╲DIGITAL ZOOM BEEN╱
       │         ╲  GIVEN?  ╱
       │          ╲       ╱
       │           ╲     ╱
       │            YES │
       │                ▼
       │     ┌──────────────────────────┐
       │     │  CUT OUT AND ENLARGE      │ ～S4
       │     │PREDETERMINED REGIONS OF   │
       │     │  RIGHT AND LEFT IMAGES    │
       │     └──────────┬───────────────┘
       │                │              ╱╲ ～S9
       │                │        YES  ╱   ╲
       │                │◄───────────╱ HAS ╲
       │                │            ╲INSTRUCTION╱
       │                ▼            ╲OF PARALLAX AMOUNT╱
       │     ┌──────────────────────┐╲ADJUSTMENT BEEN╱
       │     │  CALCULATE IMAGE     │ ～S5 ╲GIVEN?╱
       │     │    SHIFT AMOUNT      │      ╲    ╱
       │     └──────────┬───────────┘       NO
       │                │
       │                ▼
       │     ┌──────────────────────┐
       │     │CALCULATE DISPLAY RANGE│ ～S6
       │     └──────────┬───────────┘
       │                │
       │                ▼
       │     ┌──────────────────────┐
       │     │  UPDATE STEREOSCOPIC │ ～S7
       │     │      DISPLAY         │
       │     └──────────┬───────────┘
       │                │
       │                ▼
       │                ╱╲ ～S8
       │               ╱   ╲
      NO ─────────────╱IS DISPLAY╲
                      ╲ ENDED?   ╱
                       ╲       ╱
                         YES
                          │
                          ▼
                    ┌──────────┐
                    │   END    │
                    └──────────┘
```

21

# FIG.11

FIG.12

18

| FEATURE POINT EXTRACTION UNIT | → | PARALLAX AMOUNT DETECTION UNIT | → | ADJUSTMENT AMOUNT COMPUTING UNIT |

181

CORRESPONDING POINT EXTRACTION UNIT

182

183

184

Left Image

Right Image

TO PARALLAX CONTROL UNIT

FIG.13A

FIG.13B

33

33

33

35

35

35

35

35

33

33

34

34

34

34

35

35

33

33

31R

31L

32

FIG.14

```
                    ┌──────────┐
                    │  START   │
                    └────┬─────┘
                         │
        ┌────────────────▼────────────────┐
        │ CAPTURE RIGHT AND LEFT IMAGES   │~S11
        └────────────────┬────────────────┘
                         │
        ┌────────────────▼────────────────┐
        │      DETECT PARALLAX AMOUNT      │~S12
        └────────────────┬────────────────┘
                         │
        ┌────────────────▼────────────────┐
        │   CALCULATE IMAGE SHIFT AMOUNT   │~S13
        └────────────────┬────────────────┘
                         │
        ┌────────────────▼────────────────┐
        │      CALCULATE DISPLAY RANGE     │~S14
        └────────────────┬────────────────┘
                         │
        ┌────────────────▼────────────────┐
        │    UPDATE STEREOSCOPIC DISPLAY   │~S15
        └────────────────┬────────────────┘
```

S16

HAS INSTRUCTION OF DIGITAL ZOOM BEEN GIVEN?

YES

S18

CUT OUT AND ENLARGE PREDETERMINED REGIONS OF RIGHT AND LEFT IMAGES

NO

S17

IS DISPLAY ENDED?

NO

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3653790 B